(19) **Europäisches Patentamt / European Patent Office / Office européen des brevets**

(11) **EP 4 066 412 B1**

(12) **FASCICULE DE BREVET EUROPEEN**

(45) Date de publication et mention
de la délivrance du brevet:
**06.08.2025 Bulletin 2025/32**

(21) Numéro de dépôt: **20824315.4**

(22) Date de dépôt: **26.11.2020**

(51) Classification Internationale des Brevets (IPC):
***H04B 7/22*** *(2006.01)*

(52) Classification Coopérative des Brevets (CPC):
**H04B 7/22; H04W 52/367**

(86) Numéro de dépôt international:
**PCT/FR2020/052196**

(87) Numéro de publication internationale:
**WO 2021/105628 (03.06.2021 Gazette 2021/22)**

(54) **PROCÉDÉ ET DISPOSITIF DE PARAMÉTRAGE D'UN SYSTÈME DE COMMUNICATION PAR RÉTRODIFFUSION AMBIANTE**

**VERFAHREN UND VORRICHTUNG ZUM KONFIGURIEREN EINES KOMMUNIKATIONSSYSTEMS MIT UMGEBUNGSRÜCKSTREUUNG**

**METHOD AND DEVICE FOR CONFIGURING AN AMBIENT BACKSCATTER COMMUNICATION SYSTEM**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.11.2019 FR 1913558**

(43) Date de publication de la demande:
**05.10.2022 Bulletin 2022/40**

(73) Titulaire: **Orange
92130 Issy-les-Moulineaux (FR)**

(72) Inventeurs:
• **KELIF, Jean-Marc
92326 Châtillon Cedex (FR)**
• **PHAN HUY, Dinh Thuy
92326 Châtillon Cedex (FR)**

(74) Mandataire: **Cabinet Beau de Loménie
103, rue de Grenelle
75340 Paris Cedex 07 (FR)**

(56) Documents cités:
**WO-A1-2008/099067**

• **VAN HUYNH NGUYEN ET AL: "Ambient Backscatter Communications: A Contemporary Survey", IEEE COMMUNICATIONS SURVEYS & TUTORIALS, vol. 20, no. 4, 1 October 2018 (2018-10-01), pages 2889 - 2922, XP011698260, DOI: 10.1109/COMST.2018.2841964**

EP 4 066 412 B1

**Description**

Technique antérieure

La présente invention appartient au domaine général des télécommunications. Elle concerne plus particulièrement un procédé de paramétrage d'un système de communication par rétrodiffusion ambiante, ainsi qu'un dispositif de paramétrage associé. Elle concerne également un système de communication par rétrodiffusion ambiante dûment paramétré selon ledit procédé. L'invention trouve une application particulièrement avantageuse, bien que nullement limitative, pour des applications du type « Internet des objets » (« Internet of Things » ou IoT dans la littérature anglo-saxonne).

La technologie de communication par rétrodiffusion ambiante est aujourd'hui bien connue. Les principes techniques sur lesquels s'appuie cette technologie sont décrits, notamment, dans le document : « Ambient Backscatter Communications: A Contemporary Survey », N. Van Huynh, D. Thai Hoang, X. Lu, D. Niyato, P. Wang, D. In Kim, IEEE Communications Surveys & Tutorials, vol. 20, no. 4, pp. 2889-2922, Fourthquarter 2018.

De manière conventionnelle, la rétrodiffusion d'un signal ambiant s'effectue entre un dispositif transmetteur et un dispositif récepteur occupant des positions respectives fixes.

Le signal ambiant concerné correspond à un signal radio émis, de manière permanente ou bien de manière récurrente, par au moins une source dans une bande fréquentielle donnée. Par exemple, il peut s'agir d'un signal de télévision, d'un signal de téléphonie mobile (3G, 4G, 5G), d'un signal Wi-Fi, d'un signal WiMax, etc.

Pour communiquer avec un dispositif récepteur distinct de la source, un dispositif transmetteur exploite le signal ambiant pour envoyer des données vers ledit dispositif récepteur. Plus particulièrement, le dispositif transmetteur réfléchit le signal ambiant vers le dispositif récepteur, éventuellement en le modulant. Le signal ainsi réfléchi est dit « signal rétrodiffusé », et est destiné à être décodé par le dispositif récepteur (i.e. le dispositif récepteur extrait du signal rétrodiffusé une information transmise par le dispositif transmetteur, par exemple sous forme de bits).

Le fait qu'aucune onde radio supplémentaire (au sens d'une onde autre que celle issue du signal ambiant) n'est émise par le dispositif transmetteur rend la technologie de rétrodiffusion ambiante particulièrement attractive. En effet, le coût énergétique d'une communication est ainsi optimisé, ce qui est notamment d'importance dans le contexte actuel de l'IoT où chaque objet de la vie courante a vocation à devenir un objet communicant.

Pour mettre en œuvre la technologie de communication par rétrodiffusion ambiante, le dispositif transmetteur est configuré pour recevoir le signal ambiant, mais aussi le rétrodiffuser (état dit de « rétrodiffusion ») ou non (état dit de « non-rétrodiffusion ») vers le dispositif récepteur. Le dispositif récepteur, quant à lui, est configuré pour décoder le signal éventuellement rétrodiffusé par le dispositif transmetteur.

Cela étant, et en pratique, ce décodage ne peut être mis en œuvre que si l'écart de puissance électromagnétique reçue par le dispositif récepteur, entre des instants où le dispositif transmetteur est dans les états respectivement de non-rétrodiffusion et de rétrodiffusion, et dit encore « l'écart de puissance », dépasse un seuil déterminé, dit « seuil de puissance ». En effet, si ce seuil de puissance n'est pas atteint, le dispositif récepteur n'est pas en mesure de détecter que le dispositif transmetteur est dans un état de rétrodiffusion, et donc ne met en œuvre aucun décodage (essentiellement pour des raisons de préservation de son autonomie énergétique). Dit encore autrement, l'atteinte dudit seuil de puissance est un facteur limitant de la technologie de communication par rétrodiffusion ambiante.

Exposé de l'invention

La présente invention a pour objectif de remédier à tout ou partie des inconvénients de l'art antérieur, notamment ceux exposés ci-avant, en proposant une solution qui permette d'obtenir un écart de puissance supérieur, en valeur absolue, audit seuil de puissance, de sorte à améliorer l'efficacité de la communication par rétrodiffusion ambiante entre un dispositif transmetteur et un dispositif récepteur.

A cet effet, et selon un premier aspect, l'invention concerne un procédé de paramétrage d'un système de communication par rétrodiffusion ambiante comportant une source émettrice dans une bande fréquentielle donnée, un dispositif transmetteur et un dispositif récepteur, ledit système comportant également une surface apte à réfléchir des signaux provenant de la source et / ou du dispositif transmetteur vers le dispositif récepteur, ledit système étant paramétré par :

- les positions respectives de la source et des dispositifs transmetteur et récepteur,
- la fréquence d'émission de la source dans ladite bande fréquentielle,

ledit procédé étant mis en œuvre par un dispositif de paramétrage et comportant une étape de détermination d'une valeur, dite « valeur calculée », d'au moins un desdits paramètres de sorte qu'une fonction de calcul évaluant, en fonction desdits paramètres et de l'influence de la surface sur les signaux destinés à être reçus par le dispositif récepteur, l'écart de puissance reçue par le dispositif récepteur selon que le dispositif transmetteur est dans un état de rétrodiffusion ou de non-rétrodiffusion, est, en valeur absolue, supérieure ou égale à un seuil à partir duquel le dispositif récepteur est apte à décoder un signal émis par la source et rétrodiffusé par le dispositif transmetteur.

Ainsi, selon ledit procédé de paramétrage, il est proposé de contrôler la valeur de l'écart de puissance en faisant varier un ou plusieurs paramètres définissant le système de communication par rétrodiffusion ambiante. Plus particulièrement, l'invention permet de rechercher une ou plusieurs valeurs desdits paramètres de sorte à garantir que l'écart de puissance soit supérieur ou égal au seuil de puissance au-delà duquel le décodage d'un signal rétrodiffusé est assuré.

Pour garantir l'atteinte, a minima, dudit seuil de puissance, le procédé de paramétrage s'appuie avantageusement, et d'une part, sur le fait que le système de communication par rétrodiffusion ambiante comporte ladite surface apte à réfléchir des signaux provenant de la source et / ou du dispositif transmetteur vers le dispositif récepteur. Une telle surface, du fait de sa présence dans l'environnement de la source et des dispositifs transmetteur et récepteur, contribue à augmenter l'écart de puissance maximal atteignable côté dispositif récepteur en comparaison avec une configuration où la surface ne serait pas présente.

En effet, du fait de la présence de ladite surface, davantage de signaux sont susceptibles d'être acheminés vers le dispositif récepteur. Il s'agit de signaux issus de la source et / ou du dispositif transmetteur et qui, grâce à la surface, sont réfléchis vers le dispositif récepteur, alors même que ces signaux auraient suivi un parcours différent (i.e. un parcours ne menant pas au dispositif récepteur) si la surface n'était pas introduite à dessein dans l'environnement de la source et des dispositifs transmetteur et récepteur.

Il importe de noter que l'invention couvre non seulement le cas où la surface forme un élément introduit manuellement et de manière volontaire dans l'environnement de la source et des dispositifs transmetteur et récepteur, mais également le cas où la surface est déjà présente fortuitement dans cet environnement (ex : plaque d'indication de rue) et exploitée à dessein, via le paramétrage du système de communication par rétrodiffusion ambiante, pour garantir l'atteinte du seuil de puissance. Ainsi, l'invention peut être avantageusement adaptée à tout type de configuration spatiale.

D'autre part, le procédé de paramétrage s'appuie de manière avantageuse sur ladite fonction de calcul qui traduit, via une expression analytique que les inventeurs ont réussi à établir, l'influence des paramètres susmentionnés pour le système de communication par rétrodiffusion ambiante mais également de la surface dans l'évaluation de l'écart de puissance.

Cette expression analytique, décrite en détails ultérieurement dans un mode particulier de réalisation de l'invention, s'exprime sous la forme d'une somme de plusieurs termes faisant chacun intervenir tout ou partie des paramètres du système de communication par rétrodiffusion ambiante. En outre, l'expression d'au moins une partie de ces termes est dépendante de la présence de la surface, via notamment la présence de quantités homogènes à des distances et représentatives des positions respectives de la source et des dispositifs transmetteur et récepteur par rapport à ladite surface.

D'un point de vue mathématique, ladite fonction de calcul est donc une fonction de plusieurs variables (i.e. lesdites variables correspondent aux paramètres du système de communication). L'invention est dès lors remarquable en ce qu'elle donne accès de manière très précise, via ladite fonction de calcul, aux variations de l'écart de puissance en fonction de variations de chacun des paramètres du système de communication.

En définitive, l'invention permet de tirer parti de manière efficace, via ladite fonction de calcul, du surplus de puissance transmis au dispositif récepteur du fait de la présence de la surface, en déterminant un paramétrage du système de communication grâce auquel l'atteinte dudit seuil de puissance est garantie. En conséquence, la détectabilité du dispositif transmetteur, lorsqu'il est dans un état de rétrodiffusion, par le dispositif récepteur est améliorée, ce qui conduit in fine à améliorer l'efficacité de la communication par rétrodiffusion ambiante entre ces dispositifs.

Dans des modes particuliers de mise en œuvre, le procédé de paramétrage peut comporter en outre l'une ou plusieurs des caractéristiques suivantes, prises isolément ou selon toutes les combinaisons techniquement possibles.

Dans des modes particuliers de mise en œuvre, le procédé comporte en outre, avant la mise en œuvre de l'étape de détermination, une étape d'obtention de ladite fonction de calcul.

Dans des modes particuliers de mise en œuvre, la fréquence d'émission est un paramètre fixe donné et :

- les positions respectives des dispositifs transmetteur et récepteur sont des paramètres fixes donnés, le paramètre dont la valeur calculée est déterminée étant la position de la source ; ou
- les positions respectives de la source et du dispositif transmetteur sont des paramètres fixes donnés, le paramètre dont la valeur calculée est déterminée étant la position du dispositif récepteur ; ou
- les positions respectives de la source et du dispositif récepteur sont des paramètres fixes donnés, le paramètre dont la valeur calculée est déterminée étant la position du dispositif transmetteur.

Suivant de telles dispositions, il est considéré que trois des paramètres du système sont des paramètres fixes donnés et que le quatrième paramètre restant est quant à lui variable. Ainsi, la valeur calculée qui est déterminée est celle dudit paramètre considéré comme variable. Procéder de cette manière revient donc à considérer que la valeur de l'écart de puissance peut être ajustée selon un seul degré de liberté, à savoir celui défini par ledit paramètre restant variable. De telles dispositions permettent donc de simplifier le paramétrage du système de communication par rétrodiffusion ambiante puisque la recherche d'une valeur calculée ne porte plus que sur un seul paramètre.

Dans des modes particuliers de mise en œuvre, les positions respectives de la source et des dispositifs transmetteur et récepteur sont des paramètres fixes donnés, le paramètre dont la valeur calculée est déterminée étant la fréquence d'émission.

Une telle mise en œuvre constitue une variante de celle mentionnée ci-avant, dans laquelle la fréquence d'émission ainsi que les positions respectives de deux éléments (source, dispositif transmetteur, dispositif récepteur) du système de communication sont fixés.

Dans des modes particuliers de mise en œuvre, ladite valeur calculée est déterminée dans ladite bande fréquentielle de sorte à maximiser la fonction de calcul.

Dans des modes particuliers de mise en œuvre, ladite valeur calculée est déterminée par une méthode de dichotomie.

Dans des modes particuliers de mise en œuvre, la surface est configurée pour réfléchir des signaux provenant de la source et / ou du dispositif transmetteur sans direction privilégiée.

Dans des modes particuliers de mise en œuvre, la fonction de calcul comporte trois termes, dont :

- un premier terme représentatif de la contribution, en termes de puissance, de signaux rétrodiffusés par le dispositif transmetteur et parvenant au dispositif récepteur sans réflexion sur la surface,
- un deuxième terme représentatif de la contribution, en termes de puissance, d'un couplage entre des signaux rétrodiffusés par le dispositif transmetteur et parvenant au dispositif récepteur sans réflexion sur la surface et des signaux émis par la source et parvenant au dispositif récepteur sans réflexion sur la surface,
- un troisième terme représentatif de la contribution, en termes de puissance, d'un couplage entre des signaux rétrodiffusés par le dispositif transmetteur et parvenant au dispositif récepteur sans réflexion sur la surface et des signaux émis par la source et parvenant au dispositif récepteur après réflexion sur la surface.

Selon un deuxième aspect, l'invention concerne un programme d'ordinateur comportant des instructions pour la mise en œuvre du procédé de paramétrage selon l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un troisième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un quatrième aspect, l'invention concerne un dispositif de paramétrage d'un système de communication par rétrodiffusion ambiante comportant une source émettrice dans une bande fréquentielle donnée, un dispositif transmetteur et un dispositif récepteur, ledit système comportant également une surface apte à réfléchir des signaux provenant de la source et / ou du dispositif transmetteur vers le dispositif récepteur, ledit système étant paramétré par :

- les positions respectives de la source et des dispositifs transmetteur et récepteur,
- la fréquence d'émission de la source dans ladite bande fréquentielle,

ledit dispositif comportant un module de détermination, configuré pour déterminer une valeur, dite « valeur calculée », d'au moins un desdits paramètres de sorte qu'une fonction de calcul évaluant, en fonction desdits paramètres et de l'influence de la surface sur les signaux destinés à être reçus par le dispositif récepteur, l'écart de puissance reçue par le dispositif récepteur selon que le dispositif transmetteur est dans un état de rétrodiffusion ou de non-rétrodiffusion, est, en valeur absolue, supérieure ou égale à un seuil à partir duquel le dispositif récepteur est apte à décoder un signal émis par la source et rétrodiffusé par le dispositif transmetteur.

Dans des modes particuliers de réalisation, le dispositif de paramétrage peut comporter en outre l'une ou plusieurs des caractéristiques suivantes, prises isolément ou selon toutes les combinaisons techniquement possibles.

Dans des modes particuliers de mise en œuvre, ledit dispositif de paramétrage comporte également un module d'obtention configuré pour obtenir ladite fonction de calcul.

Dans des modes particuliers de mise en œuvre, le dispositif de paramétrage est compris dans la source, ou dans le dispositif transmetteur, ou dans le dispositif récepteur.

Selon un cinquième aspect, l'invention concerne un système de communication par rétrodiffusion ambiante comportant une source émettrice dans une bande fréquentielle donnée, un dispositif transmetteur et un dispositif récepteur, ledit système comportant également un dispositif de paramétrage selon le quatrième aspect ainsi qu'une surface apte à réfléchir des signaux provenant de la source et / ou du dispositif transmetteur vers le dispositif récepteur, ledit système étant paramétré par :

- les positions respectives de la source et des dispositifs transmetteur et récepteur,
- la fréquence d'émission de la source dans ladite bande fréquentielle,

la valeur d'au moins un desdits paramètres étant déterminée par ledit dispositif de paramétrage.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente schématiquement, dans son environnement, un mode particulier de réalisation d'un système de communication par rétrodiffusion ambiante selon l'invention;

[Fig. 2] la figure 2 correspond à une autre représentation du système de la figure 1, dans laquelle sont indiquées les positions respectives d'un dispositif transmetteur, d'un dispositif récepteur, d'une source et d'une surface appartenant audit système ;

[Fig. 3] la figure 3 représente schématiquement un exemple d'architecture matérielle d'un dispositif de paramétrage pour la mise en œuvre d'un procédé de paramétrage selon l'invention ;

[Fig. 4] la figure 4 représente, sous forme d'ordinogramme, un mode particulier de mise en œuvre du procédé de paramétrage, ledit procédé comportant une étape de détermination d'une valeur calculée d'au moins un paramètre du système de communication par rétrodiffusion ambiante ;

[Fig. 5] la figure 5 représente schématiquement un mode particulier de mise en œuvre de l'étape de détermination du procédé de la figure 4 ;

[Fig. 6] la figure 6 représente schématiquement un autre mode particulier de mise en œuvre de l'étape de détermination du procédé de la figure 4.

Description des modes de réalisation

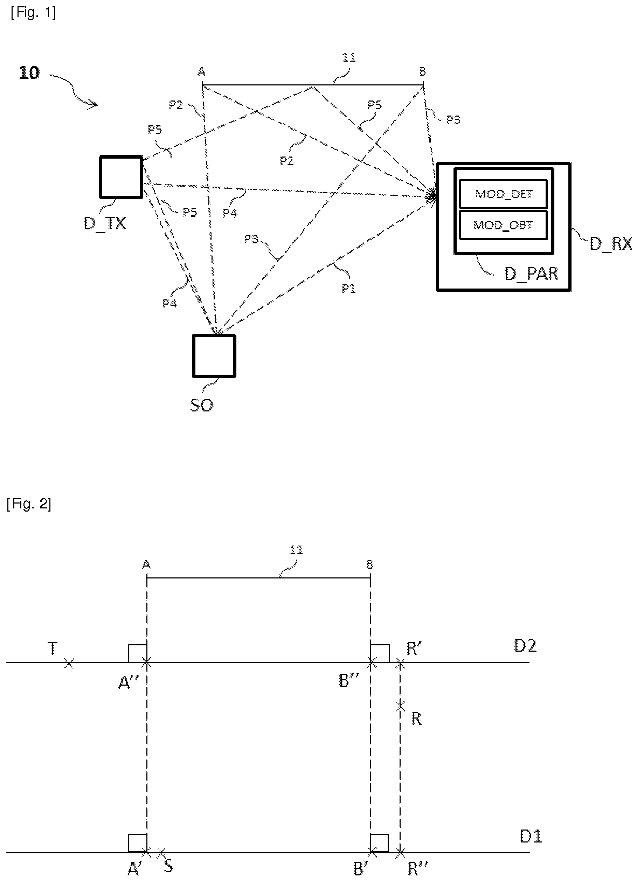

La figure 1 représente schématiquement, dans son environnement, un mode particulier de réalisation d'un système 10 de communication par rétrodiffusion ambiante selon l'invention.

Tel qu'illustré par la figure 1, le système 10 de communication comporte une source émettrice SO configurée pour émettre, selon une fréquence d'émission F_E comprise dans une bande fréquentielle donnée dite « bande d'émission », un signal radioélectrique dit « signal ambiant ». L'émission du signal ambiant s'effectue par exemple de manière permanente ou bien de manière récurrente.

Pour la suite de la description, et tel qu'illustré par la figure 1, on considère de manière nullement limitative le cas où le signal ambiant n'est émis que par une seule source. Le choix consistant à considérer une seule source est ici réalisé à des fins de simplification de la description uniquement. Aussi, aucune limitation n'est attachée au nombre de sources pouvant être considérée dans le cadre de la présente invention, les développements qui suivent étant en effet généralisables sans difficulté par l'homme du métier au cas d'une pluralité de sources non cohérentes entre elles.

Par « signal radioélectrique », on fait référence ici à une onde électromagnétique se propageant par des moyens non filaires, dont les fréquences sont comprises dans le spectre traditionnel des ondes radioélectriques (quelques hertz à plusieurs centaines de gigahertz).

A titre d'exemple nullement limitatif, le signal ambiant est un signal de téléphonie mobile 4G dans la bande d'émission [811 MHz, 821 MHz] par la source SO qui prend la forme d'une antenne-relais.

Il convient toutefois de préciser que l'invention reste applicable à d'autres types de signaux radioélectriques, comme par exemple un signal de téléphonie mobile autre que 4G (par exemple 2G, 3G, 5G), un signal Wi-Fi, un signal WiMax, un signal DVB-T, etc. D'une manière générale, aucune limitation n'est attachée au signal radio ambiant pouvant être considéré dans le cadre de la présente invention. En conséquence, il convient de noter que le nombre d'antennes équipant la source SO ne constitue pas un facteur limitant de l'invention.

Le système 10 de communication comporte également un dispositif transmetteur D_TX ainsi qu'un dispositif récepteur D_RX respectivement configurés afin de communiquer entre eux par rétrodiffusion ambiante à partir du signal ambiant émis par la source SO. Il est à noter que, conformément à l'invention, le dispositif récepteur D_RX est distinct de la source SO.

Dans la suite de la description, et tel qu'illustré par la figure 1, on considère de manière non limitative que le système 10 de communication comprend un seul dispositif transmetteur D_TX et un seul dispositif récepteur D_RX. Il convient toutefois de préciser que l'invention est également applicable à un système de communication comprenant une pluralité de dispositifs transmetteurs et / ou une pluralité de dispositifs émetteurs, les développements nécessaires pour une telle généralisation pouvant être mis en œuvre sans difficulté par l'homme du métier.

De manière connue en soi, la communication par rétrodiffusion ambiante consiste en l'exploitation du signal ambiant, par le dispositif transmetteur D_TX, pour envoyer des données vers ledit dispositif récepteur D_RX. Plus particulièrement, le dispositif transmetteur D_TX (respectivement le dispositif récepteur D_RX) est configuré pour effectuer, à partir du signal ambiant (respectivement à partir du signal rétrodiffusé), des traitements visant à rétrodiffuser ledit signal ambiant (respectivement visant à décoder ledit signal rétrodiffusé), en mettant en œuvre un procédé de rétrodiffusion (respectivement un procédé de décodage).

A cet effet, le dispositif transmetteur D_TX (respectivement le dispositif récepteur D_RX) comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en œuvre le procédé de rétrodiffusion (respectivement le procédé de décodage).

Alternativement ou en complément, le dispositif transmetteur D_TX (respectivement le dispositif récepteur D_RX) comporte également un ou des circuits logiques programmables, de type FPGA, PLD, etc., et / ou circuits intégrés spécialisés (ASIC), et / ou un ensemble de composants électroniques discrets, etc. adaptés à mettre en œuvre le procédé de rétrodiffusion (respectivement le procédé de décodage).

En d'autres termes, le dispositif transmetteur D_TX (respectivement le dispositif récepteur D_RX) comporte un ensemble de moyens configurés de façon logicielle (programme d'ordinateur spécifique) et / ou matérielle (FPGA, PLD, ASIC, etc.) pour mettre en œuvre le procédé de rétrodiffusion (respectivement le procédé de décodage).

Les aspects spécifiques concernant l'émission de données par rétrodiffusion à destination du dispositif récepteur D_RX, ainsi que ceux concernant les techniques de décodage mises en œuvre par ce dernier, sont connus de l'homme du métier et sortent du cadre de la présente invention. Par conséquent, ils ne sont pas détaillés ici plus avant.

Dans le présent mode de réalisation, le dispositif transmetteur D_TX est équipé d'une antenne (non représentée sur les figures) configurée, de manière connue en soi, pour recevoir le signal ambiant mais aussi le rétrodiffuser vers le dispositif récepteur D_RX. Il convient de noter qu'aucune limitation n'est attachée au nombre d'antennes pouvant équiper le dispositif transmetteur D_TX.

En pratique, le dispositif transmetteur D_TX est associé à une bande fréquentielle, dite « bande d'influence », qui correspond à la bande fréquentielle dans laquelle l'antenne est apte à recevoir / rétrodiffuser des signaux. Lorsque ladite bande d'influence est incluse dans la bande d'émission associée à la source SO, elle est qualifiée de « bande de travail ». Par « bande de travail », on fait référence ici au fait que le dispositif transmetteur D_TX est compatible avec la source SO, à savoir donc que la rétrodiffusion peut être effectuée pour toute fréquence comprise dans ladite bande de travail.

Rien n'exclut cependant de considérer une bande d'influence qui ne soit pas incluse dans la bande d'émission. Il est néanmoins implicite que pour que le dispositif transmetteur D_TX soit en mesure de rétrodiffuser le signal ambiant, ladite bande d'influence et ladite bande d'émission doivent être d'intersection non vide, la bande de travail correspondant dès lors à cette intersection.

Le dispositif transmetteur D_TX est également associé à des états de fonctionnement, à savoir au moins un état dit de « rétrodiffusion » (le dispositif transmetteur D_TX rétrodiffuse le signal ambiant) ainsi qu'un état contraire dit de « non-rétrodiffusion » (le dispositif transmetteur D_TX ne rétrodiffuse pas le signal ambiant, ou, encore dit autrement, est « transparent » au signal ambiant). Ces états correspondent à des configurations dans lesquelles ladite antenne est connectée à des impédances distinctes. Il s'agit typiquement d'une impédance positive, voire nulle, pour un état de rétrodiffusion, et à l'inverse une impédance théoriquement infinie pour l'état de non-rétrodiffusion.

Pour la suite de la description, on considère de manière nullement limitative que le dispositif transmetteur D_TX est associé à un seul état de rétrodiffusion ainsi qu'un seul état de non-rétrodiffusion. L'invention reste néanmoins applicable dans le cas où le dispositif transmetteur D_TX est associé à une pluralité d'états de rétrodiffusion, ces états étant distincts entre eux en ce qu'ils sont mis en œuvre grâce à des impédances respectives distinctes entre elles (l'état de non-rétrodiffusion reste quant à lui unique). Les développements qui suivent sont généralisables sans difficulté par l'homme du métier au cas où une pluralité d'état de rétrodiffusion est considérée.

Dans le présent mode de réalisation, le dispositif récepteur D_RX est équipé d'une antenne de réception (non représentée sur les figures) configurée pour recevoir des signaux dans ladite bande de travail. Par exemple, ledit dispositif récepteur D_RX est un téléphone cellulaire de type smartphone.

Il convient cependant de noter qu'aucune limitation n'est attachée au nombre d'antennes pouvant équiper le dispositif récepteur D_RX.

D'une manière générale, aucune limitation n'est attachée aux formes structurelles pouvant être prises respectivement par la source SO et le dispositif récepteur D_RX. A titre d'exemples nullement limitatifs, les configurations suivantes sont envisageables selon la bande fréquentielle de travail considérée :

- la source SO est un téléphone cellulaire, par exemple de type smartphone, et le dispositif récepteur D_RX est une station de base,
- la source SO et le dispositif récepteur D_RX sont tous deux des téléphones cellulaires, par exemple de type smartphone,
- la source SO est une passerelle domestique (encore dite « box Internet ») émettant un signal Wi-Fi, et le dispositif récepteur D_RX est un téléphone cellulaire, par exemple de type smartphone, etc.

Conformément à l'invention, le système 10 de communication par rétrodiffusion ambiante comporte également une surface 11 apte à réfléchir des signaux provenant de la source SO et / ou du dispositif transmetteur D_TX vers le dispositif récepteur D_RX. Cette surface 11 est par exemple configurée pour réfléchir les signaux sans direction privilégiée. Une telle surface 11 présente au moins une face (i.e. la face vers laquelle sont dirigées les ondes de signaux incidents) dont la rugosité est par exemple adaptée de sorte à permettre une telle réflexion.

A titre d'exemple nullement limitatif, ladite surface 11 présente une face dont la rugosité est définie par des aspérités réparties de manière périodique selon une direction dans laquelle s'étend la surface 11. Selon un exemple plus spécifique, lesdites aspérités sont identiques entres elles et prennent la forme de demis cylindres circulaires dont les axes respectifs sont parallèles entre eux. Pour plus de renseignements sur la conception d'une telle surface, l'homme du métier peut se reporter au chapitre 2.3 du document : « Recommendation ITU-R P.2040-1 (07/2015) : Effects of building materials and structures on radiowave propagation above about 100 MHz-P Series-Radiowave ». Une surface 11 ainsi réalisée permet de réfléchir un signal incident dirigé vers lesdites aspérités sans direction privilégiée. Dit encore autrement, un tel signal incident est réfléchi, dans la partie de l'environnement positionnée du côté des aspérités, de manière omnidirectionnelle.

Rien n'exclut toutefois d'avoir une surface présentant une face dont la rugosité est définie par des aspérités autre que des demis cylindres parallèles entre eux. Rien n'exclut non plus que lesdites aspérités soient réparties non périodiquement. D'une manière générale, l'homme du métier sait concevoir une surface dont la topologie est apte à réfléchir un signal radio vers le dispositif récepteur D_RX.

Dans le présent mode de réalisation, ladite surface 11 est positionnée fixe, normalement au plan dans lequel est représentée la figure 1, pour réfléchir des signaux provenant de la source SO et du dispositif transmetteur D_TX vers le dispositif récepteur D_RX. Une telle configuration de la surface 11 implique donc, notamment, que la source SO et les dispositifs transmetteur D_TX et récepteur D_RX sont positionnés du même côté de la surface 11, plus particulièrement en regard d'une face dont la rugosité est adaptée, comme cela est mentionné ci-avant.

On comprend bien entendu que pour que des signaux provenant à la fois de la source SO et du dispositif transmetteur D_TX soient réfléchis vers le dispositif récepteur D_RX, la taille de la surface 11 doit être adaptée en conséquence.

A titre purement illustratif, la surface 11 est plane et s'étend entre deux extrémités, notées A et B, et séparées d'une distance de 1 mètre. En outre, les distances entre la source SO et la surface 11 d'une part, et la source SO et le dispositif transmetteur D_TX d'autre part, sont égales à 1 mètre. La distance entre la source SO et le dispositif récepteur D_RX est quant à elle égale à 2 mètres.

D'une manière générale, l'homme du métier sait déterminer la taille adéquate pour que de tels signaux soient réfléchis vers le dispositif récepteur D_RX. Il convient également de noter qu'il sait adapter cette taille dans les cas où seuls des signaux de la source SO ou bien seuls des signaux du dispositif transmetteur D_TX sont réfléchis, via la surface 11, vers le dispositif récepteur D_RX.

Par ailleurs, rien n'exclut de considérer une surface 11 qui ne soit pas plane, comme par exemple une surface courbe, dès lors que sa position et sa taille sont adaptées pour permettre la réflexion de signaux de la source SO et / ou de signaux du dispositif transmetteur D_TX vers le dispositif récepteur D_RX. Rien n'exclut non plus de considérer une surface 11 qui ne soit pas normale au plan dans lequel est représentée la figure 1, autrement dit une surface inclinée dès lors que, là encore, elle est apte à réfléchir des signaux de la source SO et / ou des signaux du dispositif transmetteur D_TX vers le dispositif récepteur D_RX.

Au demeurant, il faut également noter que l'invention couvre non seulement le cas où la surface 11 forme un élément introduit manuellement et de manière volontaire dans l'environnement de la source SO et des dispositifs transmetteur D_TX et récepteur D_RX, mais également le cas où la surface 11 est déjà présente (fortuitement) dans cet environnement et exploitée à dessein pour l'invention. Dans ce dernier cas, et comme déjà mentionné ci-avant, aucune limitation n'est attachée à la nature de la surface 11 dès lors qu'elle est configurée pour permettre la réflexion de signaux de la source SO et / ou de signaux du dispositif transmetteur D_TX vers le dispositif récepteur D_RX. Par exemple, il peut s'agir d'une plaque fixée à une paroi et indiquant un nom de rue ou bien un numéro de rue.

Les parcours d'ondes véhiculées par les signaux considérés dans la présente invention sont représentés par des flèches en pointillés dans cette figure 1. Plus particulièrement :

- le parcours P1 fait référence à une onde issue de la source SO et parvenant directement (i.e. sans être réfléchie par la surface diffusante 11) au dispositif récepteur D_RX ;
- le parcours P2 (respectivement le parcours P3) fait référence à une onde issue de la source SO et dont une réflexion au niveau de l'extrémité A (respectivement au niveau de l'extrémité B) de la surface 11 parvient au dispositif récepteur D_RX ;
- le parcours P4 fait référence à une onde issue de la source SO, puis rétrodiffusée par le dispositif transmetteur D_TX et parvenant directement au dispositif récepteur D_RX ;
- le parcours P5 fait référence à une onde issue de la source SO, puis rétrodiffusée par le dispositif transmetteur D_TX et dont une réflexion au niveau de la surface 11, entre les extrémités A et B, parvient au dispositif récepteur D_RX.

Il convient de noter que, dans cette figure 1, seules les ondes associées aux parcours P4 et P5 transportent des données que le dispositif récepteur D_RX est destiné à décoder dans le cadre d'une communication par rétrodiffusion ambiante. Il importe également de noter que ladite figure 1 est donnée à titre purement illustratif. Ainsi, elle ne comporte par exemple aucun élément, autre que la surface 11, susceptible de réfléchir ou diffracter les ondes du signal ambiant émis par la source SO. En ce sens, la figure 1 se veut être une représentation simplifiée de l'environnement dans lequel est positionné le système 10 de communication par rétrodiffusion ambiante. Il faut néanmoins garder à l'esprit que cet environnement est en général de configuration complexe et peut comporter, en pratique, des éléments divers (murs, arbres, sol, etc.).

Comme mentionné ci-avant, le dispositif récepteur D_RX est configuré pour décoder le signal rétrodiffusé par le dispositif transmetteur D_TX. A cet effet, il est connu que le décodage du signal rétrodiffusé ne peut être mis en œuvre que si la variation de puissance électromagnétique, dite « écart de puissance » E_P, reçue par le dispositif récepteur D_RX selon que le dispositif transmetteur D_TX est dans un état de rétrodiffusion ou de non-rétrodiffusion est, en valeur absolue, supérieure à un seuil déterminé, dit « seuil de puissance » S_P. Autrement dit, ledit seuil de puissance S_P détermine la valeur de l'écart de puissance E_P à partir de laquelle le dispositif récepteur D_RX est apte à décoder un signal émis par la source SO et rétrodiffusé par le dispositif transmetteur D_TX.

Il convient toutefois de noter que bien que le décodage puisse être théoriquement mis en œuvre dès lors que |E_P| > S_P, rien n'exclut qu'une condition de décodage plus restrictive soit imposée au dispositif récepteur D_RX, comme par exemple |E_P| > N x S_P où N est un nombre réel strictement plus grand que 1. Imposer une condition plus restrictive permet d'accroitre la qualité de communication entre les dispositifs transmetteur D_TX et récepteur D_RX, mais cela limite également la quantité de données susceptibles d'être échangées entre ces dispositifs. D'une manière générale, l'homme du métier sait quelle plage de valeurs peut être considérée pour la valeur absolue de l'écart de puissance E_P de sorte que le fonctionnement du système 10 ne soit pas compromis.

Ledit seuil de puissance S_P est par exemple défini à partir d'un rapport signal sur bruit « SNR » (acronyme de l'expression anglo-saxonne « Signal to Noise Radio ») côté dispositif récepteur D_RX ou bien encore, selon une variante, à partir d'un rapport signal sur bruit plus interférence « SINR » (acronyme de l'expression anglo-saxonne « Signal to Interference plus Noise Radio ») côté dispositif récepteur D_RX. Rien n'exclut toutefois de considérer encore d'autres métriques pour définir ledit seuil de puissance, comme par exemple un taux d'erreur de décodage « BER » (acronyme de l'expression anglo-saxonne « Bit Error Rate »). Concernant ces aspects, l'homme du métier peut se référer au document : « Real-Time Ambient Backscatter Demonstration », K. Rachedi, D. T. Phan-Huy, N. Selmene, A. Ourir, M. Gautier, A. Gati, A. Galindo-Serrano, R. Fara, J. De Rosny, IEEE INFOCOM 2019 Posters and Demos, 1st May 2019, Paris, France .

Pour des raisons de simplification d'écriture (suppression de la valeur absolue), on adopte pour la suite de la description la convention selon laquelle ledit écart de puissance E_P est évalué suivant la formulation générale suivante :

$$E\_P = P\_R - P\_NR.$$

Dans cette formule, on a que :

- P_R correspond à la puissance reçue par le dispositif récepteur D_RX lorsque le dispositif transmetteur D_TX est dans l'état de rétrodiffusion (en référence à la figure 1, les ondes qui suivent les parcours P1 à P5 contribuent à la valeur de P_R),

- P_NR correspond à la puissance reçue par le dispositif récepteur D_RX lorsque le dispositif transmetteur D_TX est dans l'état de non-rétrodiffusion (en référence à la figure 1, les ondes qui suivent les parcours P1, P2 et P3 contribuent à la valeur de P_NR).

On comprend bien entendu que, suivant cette convention d'écriture, l'écart de puissance E_P est un nombre positif. Si une convention opposée venait à être adoptée (i.e. E_P = P_NR - P_R), la comparaison de l'écart E_P avec le seuil de puissance S_P requerrait l'utilisation de la valeur absolue.

De manière remarquable, les inventeurs ont réussi à établir une expression analytique précise de l'écart de puissance E_P dans le contexte de la présente invention, à savoir lorsqu'une surface telle que la surface 11 mentionnée ci-avant est présente dans l'environnement de la source SO et des dispositifs transmetteur D_TX et récepteur D_RX. Cette expression analytique s'exprime en fonction de paramètres du système 10 de communication par rétrodiffusion ambiante. Plus précisément, les paramètres en question sont :

- les positions respectives S, T, R de la source SO et des dispositifs transmetteur D_TX et récepteur D_RX,
- la fréquence d'émission F_E de la source SO dans la bande fréquentielle d'émission.

Dit encore autrement, l'écart de puissance E_P peut s'exprimer sous la forme d'une fonction qui prend en arguments lesdits paramètres F_E, S, T et R. Ladite fonction traduit également, comme cela est détaillé ci-après, l'influence de la surface 11 sur les signaux destinés à être reçus par le dispositif récepteur D_RX. Cette fonction est nommée « fonction de calcul » pour la suite de la description.

On décrit maintenant des éléments de calcul permettant d'aboutir à l'expression prise par ladite fonction de calcul dans le contexte du mode de réalisation illustré par la figure 1. A cet effet, nous introduisons la figure 2 qui correspond à une autre représentation du système 10 de la figure 1, dans laquelle sont indiquées lesdites positions S, T, R ainsi que les extrémités A et B de la surface 11. Une droite D1 et une droite D2 sont également représentées dans la figure 2, la droite D1 (respectivement la droite D2) correspondant à la droite parallèle au segment [AB] et passant par la position S de la source SO (respectivement passant par la position T du dispositif transmetteur D_TX).

En outre, on désigne par :

- P la puissance d'émission de la source SO,
- A', B' et R' les points résultant des projections orthogonales (symbolisées en pointillés sur la figure 2), sur la droite D1, des points A, B et R respectivement,
- A", B" et R" les points résultant des projections orthogonales (symbolisées en pointillés sur la figure 2), sur la droite D2, des points A, B et R respectivement,
- $G^S$, $G^T$ et $G^R$ les gains respectifs de la source SO, du dispositif transmetteur D_TX et du dispositif récepteur D_RX, c'est-à-dire les gains des antennes équipant respectivement la source SO, le dispositif transmetteur D_TX et le dispositif récepteur D_RX,
- $G^d$ un coefficient de diffusion de la surface 11 (il s'agit d'un coefficient sans dimension, analogue, par exemple, au coefficient « $R_\nu$ » indiqué en formule (51) dans le document « Recommendation ITU-R P.2040-1 (07/2015) [...] » déjà cité auparavant),
- c la vitesse de la lumière,

$$\lambda = c \,/\, F\_E$$

la longueur d'onde associée à la fréquence d'émission F_E de la source SO,

$$k = 2\pi \,/\, \lambda$$

le vecteur d'onde associé à la longueur d'onde $\lambda$,

$$K^{SR} = (G^S \times G^R \times \lambda^2) \,/\, 4\pi,$$

$$K^{SAR} = (G^S \times G^d \times G^R \times \lambda^4) \,/\, 16\pi^2,$$

$$K^{TR} = (G^T \times G^R \times \lambda^2) \,/\, 16\pi^2,$$

$$K^{STR} = (G^S \times (G^T)^2 \times G^R \times \lambda^4) / 64\pi^2,$$

- $\alpha = 0$ ou 1 si le dispositif transmetteur est dans l'état respectivement de non-rétrodiffusion ou de rétrodiffusion,

$$\beta = AB \times [SA' / SA + (SA'-SR') / AR],$$

$$\gamma = AB \times [TA'' / TA + (TA''-TR'') / AR].$$

Afin d'obtenir l'expression analytique de la fonction de calcul, on considère qu'un signal S_RX reçu par le dispositif récepteur D_RX s'écrit :

$$S\_RX = S(SO, DIR) + S(SO, DIFF) + S(D\_TX, DIR),$$

expression qu'il faut comprendre comme étant une relation vectorielle sur le corps des nombres complexes, et dans laquelle :

- S(SO, DIR) correspond au signal provenant directement de la source SO (parcours P1 en référence à la figure 1) et a pour expression :

$$S(SO, DIR) = \sqrt{\frac{K^{SR} p}{SR^2}}\, e^{i\omega t} e^{-ikSR} \quad ;$$

- S(SO, DIFF) correspond au signal provenant de la source SO après une réflexion sur la surface 11 (parcours P2 et P3 en référence à la figure 1) et a pour expression :

$$S(SO, DIFF) = \sqrt{\frac{K^{SR} K^{SAR}}{SA^2 AR^2}}\, P e^{i\omega t} e^{-ik(SA+AR)} \int_{u=0}^{u=\beta} e^{-iku}\, du \quad ;$$

- S(D_TX, DIR) correspond au signal rétrodiffusé provenant directement du dispositif transmetteur D_TX (parcours P4 en référence à la figure 1) et a pour expression :

$$S(D\_TX, DIR) = \alpha \sqrt{\frac{K^{TR} p}{ST^2 TR^2}}\, e^{i\omega t} e^{-ik(ST+TR)} \quad .$$

Il est à noter que cette relation vectorielle s'appuie sur l'hypothèse selon laquelle la puissance d'un signal S(D_TX, DIFF) rétrodiffusé parvenant au dispositif récepteur D_RX après réflexion sur la surface 11 (parcours P5 en référence à la figure 1) est négligeable en comparaison avec les puissances respectivement associées aux signaux S(SO, DIR), S(SO, DIFF) et S(D_TX, DIR). On comprend en effet qu'un tel signal S(D_TX, DIFF) a subi, tout au long de son parcours, deux réflexions : une première réflexion au niveau du dispositif transmetteur D_TX en raison de la rétrodiffusion, ainsi qu'une deuxième réflexion au niveau de la surface 11. Cette pluralité de réflexion implique que la distance parcourue par le signal S(D_TX, DIFF) est plus grande que celles parcourues respectivement par S(SO, DIR), S(SO, DIFF) et S(D_TX, DIR), de sorte que son amplitude est plus faible en comparaison avec les amplitudes respectives de ces derniers. Autrement dit, chaque réflexion induit un affaiblissement du signal correspondant. Il est à noter que cette hypothèse de modélisation sur laquelle s'appuie la formulation du signal S_RX a été validée par simulations numériques par les inventeurs.

Finalement, on introduit également la série de notations suivante :

- P(D_TX) :

$$P(D\_TX) = A^2(D\_TX)$$

où

$$A(D\_TX) = \alpha \times [K^{STR} / (ST^2 \times TR^2) \times P]^{1/2},$$

- P(D_TX, DIR) :

$$P(D\_TX, DIR) = 2\,A(DIR)A(D\_TX)\cos[k(ST + TR - SR)]$$

où

$$A(DIR) = [K^{SR} / SR^2 \times P]^{1/2},$$

- P(D_TX, DIFF) :

$$P(D\_TX, DIFF) = \frac{4}{k} A(DIFF)A(D\_TX)\sin\left(\frac{k\beta}{2}\right)\cos\left[k\left(AS + AR - TS - TR + \frac{\beta}{2}\right)\right]$$

où

$$A(DIFF) = [K^{SAR} / (AS^2 \times AR^2) \times P]^{1/2},$$

- P(DIR) :

$$P(DIR) = A^2(DIR)$$

- P(DIFF) :

$$P(DIFF) = \frac{4}{k^2}\sin^2\left(\frac{k\beta}{2}\right)A^2(DIFF)$$

- P(DIR, DIFF) :

$$P(DIR, DIFF) = \frac{4}{k} A(DIR)A(DIFF)\sin\left(\frac{k\beta}{2}\right)\cos\left[k\left(SA + AR - SR + \frac{\beta}{2}\right)\right]$$

.

A partir de cette série de notations, on a que :

- P_R = P(DIR) + P(DIFF) + P(DIR, DIFF) + P(D_TX, DIFF | $\alpha$ = 1) + P(D_TX | $\alpha$ = 1) + P(D_TX, DIR | $\alpha$ = 1), expression dans laquelle les valeurs des termes P(D_TX, DIFF), P(D_TX), P(D_TX, DIR), tels que décrits ci-avant, sont considérées pour $\alpha$ égal à 1 (i.e. les valeurs de ces termes sont obtenues pour A(D_TX) = [K^{STR} / (ST^2 \times TR^2) \times P]^{1/2}) ;
- P_NR = P(DIR) + P(DIFF) + P(DIR, DIFF) + P(D_TX, DIFF | $\alpha$ = 0) + P(D_TX | $\alpha$ = 0) + P(D_TX, DIR | $\alpha$ = 0), expression dans laquelle les valeurs des termes P(D_TX, DIFF), P(D_TX), P(D_TX, DIR), tels que décrits ci-avant, sont considérées pour $\alpha$ égal à 0 (i.e. les valeurs de ces termes sont obtenues pour A(D_TX) = 0).

En définitive, la fonction de calcul permettant d'évaluer l'écart de puissance E_P, en fonction desdits paramètres et de l'influence de la surface 11 sur les signaux destinés à être reçus par le dispositif récepteur D_RX, s'écrit :

$$E\_P = \frac{K^{STR}}{ST^2 TR^2}P$$
$$+2\sqrt{\frac{K^{SR}}{SR^2}P}\sqrt{\frac{K^{STR}}{ST^2 TR^2}P}\cos[k(ST+TR-SR)]$$
$$+\frac{4}{k}\sqrt{\frac{K^{SAR}}{AS^2 AR^2}P}\sqrt{\frac{K^{STR}}{ST^2 TR^2}P}\sin\left(\frac{k}{2}AB\left(\frac{SA'}{SA}+\frac{SA'-SR'}{AR}\right)\right)\cos\left[k\left(AS+AR-TS-TR+\frac{1}{2}AB\left(\frac{SA'}{SA}+\frac{SA'-SR'}{AR}\right)\right)\right]$$

Selon cette expression, la fonction de calcul fait intervenir trois termes qui s'additionnement entre eux, dont :

- un premier terme représentatif de la contribution, en termes de puissance, de signaux rétrodiffusés par le dispositif transmetteur D_TX et parvenant au dispositif récepteur D_RX sans réflexion sur la surface 11 (terme sans fonction trigonométrique),
- un deuxième terme représentatif de la contribution, en termes de puissance, d'un couplage entre des signaux rétrodiffusés par le dispositif transmetteur D_TX et parvenant au dispositif récepteur D_RX sans réflexion sur la surface 11 et des signaux émis par la source SO et parvenant au dispositif récepteur D_RX sans réflexion sur la surface 11 (terme faisant intervenir uniquement la fonction trigonométrique cos),
- un troisième terme représentatif de la contribution, en termes de puissance, d'un couplage entre des signaux rétrodiffusés par le dispositif transmetteur D_TX et parvenant au dispositif récepteur D_RX sans réflexion sur la surface 11 et des signaux émis par la source SO et parvenant au dispositif récepteur D_RX après réflexion sur la surface 11 (terme faisant intervenir un produit de fonctions trigonométriques sin et cos).

Il importe alors de noter que le troisième terme (i.e. le terme faisant intervenir un produit de fonctions trigonométriques sin et cos) est celui qui est représentatif de l'influence (i.e. de la contribution) de la surface 11 dans l'évaluation de l'écart de puissance E_P. On comprend donc, à la vue de l'expression analytique de la fonction de calcul, que l'utilisation volontaire de la surface 11 dans l'environnement de la source SO et des dispositifs transmetteur D_TX et récepteur D_RX permet avantageusement d'augmenter l'écart de puissance maximal atteignable (du fait de la présence dudit troisième terme) en comparaison avec une configuration où la surface 11 ne serait pas présente. Autrement dit, l'invention est remarquable non seulement en ce que l'expression de la fonction de calcul ait été déterminée par les inventeurs, mais aussi avant tout parce que le système 10 de communication par rétrodiffusion ambiante comporte à dessein ladite surface 11, de sorte qu'il est possible, via un procédé de paramétrage détaillé ci-après, de déterminer une valeur d'au moins un des paramètres du système 10 de sorte que ladite fonction de calcul est supérieure ou égale au seuil S_P.

Dans le présent mode de réalisation, la mise en œuvre dudit procédé de paramétrage est effectuée par un dispositif de paramétrage D_PAR qui est compris dans ledit dispositif récepteur D_RX.

Par ailleurs, au sens de la présente invention, et pour mettre en œuvre ledit procédé de paramétrage, ladite fonction de calcul correspond typiquement à un ensemble d'instructions de code. Par exemple, lesdites instructions de code sont rédigées dans le langage MATLAB, de sorte que ladite fonction de calcul correspond à un script MATLAB. L'environnement logiciel du dispositif de paramétrage D_PAR est dès lors adapté, de manière connue en soi, à l'exécution d'un tel script MATLAB.

De manière générale, aucune limitation n'est attachée au langage de programmation dans lequel sont rédigées les instructions de code de ladite fonction de calcul, qui peuvent être sous la forme de code source, code objet, ou de code intermédiaire entre code source et code objet, tel que dans une forme partiellement compilée, ou dans n'importe quelle autre forme souhaitable.

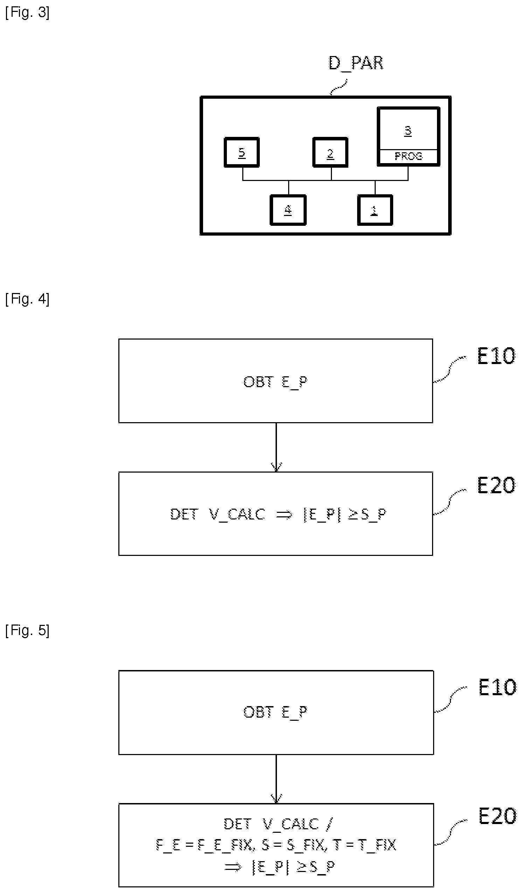

La figure 3 représente schématiquement un exemple d'architecture matérielle du dispositif de paramétrage D_PAR pour la mise en œuvre du procédé de paramétrage selon l'invention.

A cet effet, le dispositif de paramétrage D_PAR dispose de l'architecture matérielle d'un ordinateur. Tel qu'illustré par la figure 3, le dispositif de paramétrage D_PAR comporte, notamment, un processeur 1, une mémoire vive 2, une mémoire morte 3 et une mémoire non volatile 4.

La mémoire morte 3 du dispositif de paramétrage D_PAR constitue un support d'enregistrement conforme à l'invention, lisible par le processeur 1 et sur lequel est enregistré un programme d'ordinateur PROG conforme à l'invention, comportant des instructions pour l'exécution des étapes du procédé de paramétrage selon l'invention. Le programme PROG définit des modules fonctionnels du dispositif de paramétrage D_PAR, qui s'appuient ou commandent les éléments matériels 2 à 4 du dispositif de paramétrage D_PAR cités précédemment, et qui comprennent notamment un module MOD_DET de détermination, configuré pour déterminer une valeur, dite « valeur calculée », d'au moins un desdits paramètres de sorte que ladite fonction de calcul est supérieure ou égale au seuil S_P.

Il est à noter que ladite architecture matérielle du dispositif de paramétrage D_PAR intègre également les moyens déjà décrits auparavant et configurés pour mettre en œuvre le procédé de décodage du signal rétrodiffusé (ces moyens ne sont toutefois pas représentés sur la figure 3).

Pour la suite de la description, on considère de manière nullement limitative que les instructions de code définissant la fonction de calcul sont initialement mémorisées dans une mémoire équipant une entité autre que le dispositif de paramétrage D_PAR, par exemple une mémoire équipant le dispositif transmetteur D_TX, ou bien la source SO, ou bien encore une entité externe au système 10 et apte à mémoriser les instructions de ladite fonction de calcul (ex : serveur de base de données). Dès lors, dans l'exemple d'architecture matérielle considéré ici, le dispositif de paramétrage D_PAR comporte également un module MOD_OBT d'obtention configuré pour obtenir ladite fonction de calcul. Autrement dit, l'obtention des instructions de code de la fonction de calcul, par le dispositif de paramétrage D_PAR, s'effectue via un échange de données (émission / réception) commandé par le module MOD_OBT d'obtention et mis en œuvre par des moyens de communication équipant respectivement ledit dispositif de paramétrage D_PAR (moyens de communication 5 sur la figure 3 et qui intègrent notamment l'antenne du dispositif récepteur D_RX) et ladite entité.

De manière générale, les moyens de communication considérés pour un tel échange de données s'appuient sur une interface de communication. Aucune limitation n'est attachée à la nature de cette interface de communication, qui peut être filaire ou non filaire, et peut mettre en œuvre tout protocole connu de l'homme du métier (Ethernet, Wifi, Bluetooth, 3G, 4G, 5G, etc.).

La figure 4 représente, sous forme d'ordinogramme, un mode particulier de mise en œuvre, par le dispositif de paramétrage D_PAR, du procédé de paramétrage.

Tel qu'illustré par la figure 4, le procédé de paramétrage comporte tout d'abord une étape E10 d'obtention de ladite fonction de calcul évaluant, en fonction desdits paramètres, l'écart de puissance E_P. Cette étape E10 est mise en œuvre par ledit module MOD_OBT d'obtention équipant le dispositif de paramétrage D_PAR.

Une fois l'étape E10 d'obtention exécutée, le dispositif de paramétrage D_PAR dispose de la fonction de calcul permettant d'évaluer l'écart E_P en fonction des paramètres définissant le système 10 de communication par rétrodiffusion ambiante. Le dispositif de paramétrage D_PAR est donc en mesure de calculer des valeurs dudit écart E_P en attribuant des valeurs auxdits paramètres.

Suite à l'obtention de la fonction de calcul, le procédé de paramétrage comporte une étape E20 de détermination d'une valeur, dite « valeur calculée » V_CALC, d'au moins un desdits paramètres de sorte que ladite fonction de calcul est supérieure ou égale au seuil S_P.

La détermination d'une telle valeur calculée V_CALC pour au moins un desdits paramètres revient à chercher à optimiser le paramétrage du système 10 de communication par rétrodiffusion ambiante de sorte à améliorer l'efficacité de la communication entre le dispositif transmetteur D_TX et le dispositif récepteur D_RX.

La suite de la description vise à détailler des modes particuliers de mise en œuvre de ladite étape E20 de détermination. Dans chacun de ces modes de mise en œuvre de l'étape E20, il est considéré que trois des paramètres du système 10 sont des paramètres fixes donnés et que le quatrième paramètre restant est quant à lui variable. Ainsi, la valeur calculée V_CALC qui est déterminée est celle dudit paramètre considéré comme variable.

Procéder de cette manière revient donc à considérer que la valeur de l'écart de puissance E_P peut être ajustée selon un seul degré de liberté, à savoir celui défini par ledit paramètre restant variable.

A titre d'exemple nullement limitatif, et communément à tous lesdits modes de mise en œuvre de l'étape E20 de détermination, ladite valeur calculée V_CALC est déterminée par une méthode de dichotomie.

Une telle méthode de dichotomie est classiquement mise en œuvre pour tester de manière itérative des valeurs possibles du paramètre variable dans une plage de valeurs donnée, permettant ainsi de déterminer pour quelle valeur de cette plage un seuil cible est atteint (i.e. la valeur pour laquelle le seuil cible est atteint correspond donc à ladite valeur calculée V_CALC).

Ce seuil cible peut correspondre à un seuil donné, comme par exemple ledit seuil de puissance S_P, ou, comme mentionné ci-avant, un seuil supérieur audit seuil de puissance S_P.

Selon encore un autre exemple, le seuil cible peut correspondre au maximum atteignable par la fonction de calcul lorsque le paramètre variable parcourt une plage de valeurs donnée. De cette manière, l'écart de puissance E_P est maximisé pour la plage de valeurs considérée. Il convient de noter que le maximum global théorique de la fonction de calcul est atteignable lorsque le paramètre variable parcourt une plage de valeurs dont la taille est adaptée, ce point étant détaillé ci-après.

Rien n'exclut d'envisager d'autres méthodes de détermination de la valeur calculée V_CALC, le choix de la méthode de dichotomie ne constituant qu'une variante d'implémentation de l'invention. Par exemple, la méthode mise en œuvre peut être une méthode de Newton, une méthode de point fixe, une méthode de Lagrange, une méthode de la section dorée, etc.

De manière encore plus générale, il est possible de considérer, au cours de l'étape E20 de détermination, une fonction de coût correspondant à la fonction de calcul à laquelle est retranché ledit seuil cible. Dès lors, la minimisation d'une telle fonction de coût peut être mise en œuvre selon toute méthode d'optimisation connue de l'homme du métier.

La figure 5 représente schématiquement un mode particulier de mise en œuvre de l'étape E20 de détermination dans lequel la fréquence d'émission F_E de la source SO ainsi que les positions respectives S, T de la source SO et du dispositif transmetteur D_TX sont des paramètres fixes donnés. Autrement dit, lesdits paramètres fixes donnés correspondent à des valeurs constantes, ici notées F_E_FIX, S_FIX et T_FIX.

En outre, dans le mode illustré par la figure 5, le paramètre du système 10 dont la valeur calculée V_CALC est déterminée au cours de ladite étape E20 de détermination est la position R du dispositif récepteur D_RX.

Selon un exemple de mise en œuvre du mode de la figure 5, ladite valeur calculée V_CALC est déterminée (par exemple par dichotomie) de sorte que la quantité homogène à une distance et présente en argument de la fonction cosinus du deuxième terme de la fonction de calcul (i.e. la quantité ST + TR - SR) varie dans une plage de valeurs de longueur supérieure ou égale à la moitié de la longueur d'onde $\lambda$ associée à la fréquence d'émission F_E Le fait de considérer une recherche de la valeur calculée V_CALC de sorte que ladite quantité puisse varier dans une telle plage de valeurs résulte directement de l'expression analytique de la fonction de calcul. Il est possible en effet de constater, à la lecture de cette expression analytique, que le maximum global théorique de la fonction de calcul est nécessairement atteint lorsque ladite quantité balaie la plage de valeurs considérée ici.

Il importe de noter qu'il est possible d'envisager des exemples de mise en œuvre similaires à l'exemple précédent, dans lesquels la valeur calculée V_CALC est toujours associée à la position R du dispositif récepteur D_RX, et dans lesquels la quantité homogène à une distance qui est considérée est :

- la quantité en argument de la fonction cosinus du troisième terme de la fonction de calcul (i.e. AB x [SA' / SA + (SA' - SR') / AR]), ou bien
- la quantité en argument de la fonction sinus du troisième terme de la fonction de calcul (i.e. AS + AR - TS - TR + 1/2x AB x [SA' / SA + (SA' - SR') / AR]).

Par ailleurs, d'autres modes de mise en œuvre, similaires à celui de la figure 5, peuvent également être envisagés. Ces autres modes de mise en œuvre correspondent à des configurations dans lesquelles la fréquence d'émission F_E est là encore un paramètre fixe donné, et où :

- les positions respectives T, R des dispositifs transmetteur D_TX et récepteur D_RX sont des paramètres fixes donnés, le paramètre dont la valeur calculée V_CALC est déterminée étant la position S de la source SO ; ou
- les positions respectives S, R de la source SO et du dispositif récepteur D_RX sont des paramètres fixes donnés, le paramètre dont la valeur calculée V_CALC est déterminée étant la position T du dispositif transmetteur D_TX.

Les exemples de mise en œuvre détaillés ci-avant pour le mode particulier de la figure 5, dans lequel la valeur calculée V_CALC est associée à la position R du dispositif récepteur D_RX, peuvent bien entendu être adaptés à ces autres modes de mise en œuvre. Ainsi :

- si la valeur calculée V_CALC est associée à la position S de la source SO, les quantités homogènes à une distance qui peuvent être considérer sont celles en argument de la fonction cosinus du deuxième terme de la fonction de calcul, ou bien de la fonction cosinus du troisième terme de la fonction de calcul ou bien encore de la fonction sinus du troisième terme de la fonction de calcul ;
- si la valeur calculée V_CALC est associée à la position T du dispositif transmetteur D_TX, les quantités homogènes à une distance qui peuvent être considérer sont celles en argument de la fonction cosinus du deuxième terme de la fonction de calcul, ou bien de la fonction sinus du troisième terme de la fonction de calcul.

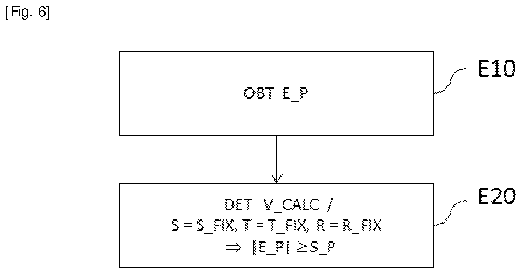

La figure 6 représente schématiquement un mode particulier de mise en œuvre de l'étape E20 de détermination dans lequel les positions respectives S, T, R de la source SO et des dispositifs transmetteur D_TX et récepteur D_RX sont des paramètres fixes donnés. Autrement dit, lesdits paramètres fixes donnés correspondent à des valeurs constantes, ici notées S_FIX, T_FIX et R_FIX.

En outre, dans le mode illustré par la figure 6, le paramètre du système 10 dont la valeur calculée V_CALC est déterminée au cours de ladite étape E20 de détermination est la fréquence d'émission F_E de la source SO.

Selon un exemple de mise en œuvre du mode de la figure 6, ladite valeur calculée V_CALC est déterminée (par exemple par dichotomie) dans la bande d'émission de la source SO de sorte à maximiser la fonction de calcul, et donc in fine maximiser l'écart de puissance E_P pour ladite bande d'émission.

Pour des raisons similaires à celles évoquées ci-avant dans le cadre du mode de la figure 5 et relatives à l'expression analytique de la fonction de calcul, il convient de noter que la fonction de calcul va nécessairement admettre son maximum global théorique lorsque la bande d'émission de la source SO comporte au moins une paire de fréquences dont l'une est le double de l'autre.

Le procédé de localisation a été décrit jusqu'à en considérant qu'un signal S_RX reçu par le dispositif récepteur D_RX s'écrit :

$$S\_RX = S(SO, DIR) + S(SO, DIFF) + S(D\_TX, DIR).$$

Comme cela a été mentionné, cette relation vectorielle s'appuie sur l'hypothèse selon laquelle la puissance d'un signal S(D_TX, DIFF) rétrodiffusé parvenant au dispositif récepteur D_RX après réflexion sur la surface 11 est négligeable en comparaison avec les puissances respectivement associées aux signaux S(SO, DIR), S(SO, DIFF) et S(D_TX, DIR). Il n'en reste pas moins que l'invention reste applicable dans le cas où un tel signal S(D_TX, DIFF) serait pris en compte dans l'expression du signal S_RX. A cet effet, les inventeurs ont pu établir que le signal S(D_TX, DIFF) a pour expression :

$$S(D\_TX, DIFF) = \alpha \sqrt{\frac{K^{SR} K^{STR} P}{TA^2 AR^2 TS^2}} e^{i\omega t} e^{-ik(TS+TA+AR)} \int_{u=0}^{u=Y} e^{-iku} du$$

où

$$K^{STR} = (G^S \times (G^T)^2 \times G^R \times \lambda^4) / 64\pi^2.$$

A partir de l'expression de S(D_TX, DIFF), l'homme du métier sait mettre à jour l'expression de la puissance P_R (respectivement de la puissance P_NR) reçue par le dispositif récepteur D_RX lors le dispositif transmetteur D_TX est dans l'état de rétrodiffusion (respectivement dans l'état de non-rétrodiffusion). Corrélativement, il sait également mettre à jour l'expression analytique de la fonction de calcul, et déterminer les positions candidates T_i solutions de cette fonction de calcul mise à jour.

L'invention a été décrite jusqu'à présent en considérant que les instructions de code définissant la fonction de calcul sont initialement mémorisées dans une mémoire équipant une entité autre que le dispositif de paramétrage D_PAR. Cela étant, l'invention reste bien entendu applicable dans le cas où lesdites instructions de code sont implémentées dans le dispositif de paramétrage D_PAR dès sa conception, rendant dès lors optionnel le fait que le dispositif de paramétrage D_PAR comporte un module d'obtention et que le procédé de paramétrage comporte une étape E10 d'obtention.

Par exemple, les instructions de code de la fonction de calcul sont implémentées dans la mémoire morte 3 du dispositif de paramétrage D_PAR de sorte à être intégrées au programme PROG. Rien n'exclut cependant que les instructions de code de la fonction de calcul soient implémentées, lors de la conception, dans une autre mémoire du dispositif de paramétrage D_PAR, le programme PROG comportant dès lors des instructions permettant d'avoir accès à la fonction de calcul.

En outre, l'invention reste également applicable lorsque le procédé de paramétrage est mis en œuvre par un dispositif de paramétrage non compris dans le dispositif récepteur D_RX. Par exemple, il peut s'agir d'un dispositif de paramétrage compris dans la source SO ou bien compris dans le dispositif transmetteur D_TX.

Selon un autre exemple, il peut également s'agir d'un dispositif externe au système 10 de communication par rétrodiffusion ambiante. Aucune limitation n'est attachée à la nature dudit dispositif externe, dès lors qu'il est configuré de manière matérielle et logicielle pour mettre en œuvre ledit procédé de paramétrage. Par exemple, il peut s'agir d'un ordinateur de type PC.

Enfin, l'invention a également été décrite jusqu'à présent en considérant des modes de mise en œuvre de l'étape E20 de détermination dans lesquels trois des paramètres du système 10 sont des paramètres fixes donnés, le quatrième paramètre restant étant quant à lui variable. Toutefois, l'invention reste applicable, au prix de calculs plus complexes au cours de l'étape E20 (et donc plus consommateurs en ressources de calcul), dans les cas où plusieurs paramètres du système 10 (par exemple deux, trois ou même quatre paramètres) sont considérés comme variables. En effet, et comme cela a été détaillé ci-avant, l'atteinte d'un seuil donné par la fonction de calcul peut toujours se ramener à la résolution d'un problème d'optimisation d'une fonction de coût. Toute méthode d'optimisation d'une fonction de coût dépendant de plusieurs variables peut être mise en œuvre, le choix d'une méthode particulière ne constituant qu'une variante d'implémentation de l'invention. Par exemple, il est toujours possible d'utiliser une méthode de dichotomie lorsque plusieurs paramètres sont considérés comme variables.

De plus, et comme cela a déjà été mentionné auparavant, l'invention est aussi applicable dans le cas où le système de communication par rétrodiffusion ambiante comporte une pluralité de sources non cohérentes entre elles. Le fait que les sources soient non cohérentes entre elles implique notamment que les écarts de puissance induits par chaque source au niveau du dispositif récepteur D_RX s'additionnent entre eux. Autrement dit, il est possible de déterminer un écart de puissance global au niveau du dispositif récepteur D_RX en additionnant lesdits écarts de puissance respectivement associés aux sources (i.e. en additionnant des fonctions de calcul déterminées de manière appropriée pour chacun des sous-système composé d'une source, du dispositif transmetteur et du dispositif récepteur).

En définitive, une fois le procédé de paramétrage exécuté, on dispose d'une valeur calculée V_CALC pour au moins un des paramètres du système 10 de communication par rétrodiffusion ambiante. Selon ledit au moins un paramètre considéré lors de l'étape E20 de détermination, il est dès lors possible d'obtenir un système dûment paramétré en ajustant la fréquence d'émission F_E de la source SO et / ou la position S de la source SO et / ou la position T du dispositif transmetteur D_TX et / ou la position R du dispositif récepteur D_RX conformément à la valeur calculée V_CALC déterminée pour ledit au moins un paramètre.

En ce qui concerne la valeur calculée d'une des positions S, T, R, il est par exemple possible de la matérialiser dans l'environnement du système 10 grâce à des moyens de signalisation, comme par exemple un panneau indiquant que la position correspondant à ladite valeur calculée constitue une position à privilégier pour améliorer la communication par rétrodiffusion ambiante.

**Revendications**

1. Procédé de paramétrage d'un système (10) de communication par rétrodiffusion ambiante comportant une source émettrice (SO) dans une bande fréquentielle donnée, un dispositif transmetteur (D_TX) et un dispositif récepteur (D_RX), ledit système comportant également une surface (11) apte à réfléchir des signaux provenant de la source et / ou du dispositif transmetteur vers le dispositif récepteur, ledit système étant paramétré par :

   - les positions (S, T, R) respectives de la source et des dispositifs transmetteur et récepteur,
   - la fréquence d'émission (F_E) de la source dans ladite bande fréquentielle,

   ledit procédé étant mis en œuvre par un dispositif de paramétrage (D_PAR) et comportant une étape (E20) de détermination d'une valeur, dite « valeur calculée » (V_CALC), d'au moins un desdits paramètres de sorte qu'une fonction de calcul évaluant, en fonction desdits paramètres et de l'influence de la surface (11) sur les signaux destinés à être reçus par le dispositif récepteur (D_RX), l'écart de puissance (E_P) reçue par le dispositif récepteur selon que le dispositif transmetteur est dans un état de rétrodiffusion ou de non-rétrodiffusion, est, en valeur absolue, supérieure ou égale à un seuil (S_P) à partir duquel le dispositif récepteur est apte à décoder un signal émis par la source et rétrodiffusé par le dispositif transmetteur.

2. Procédé selon la revendication 1, ledit procédé comportant en outre, avant la mise en œuvre de l'étape (E20) de détermination, une étape (E10) d'obtention de ladite fonction de calcul.

3. Procédé selon l'une quelconque des revendications 1 à 2, dans lequel la fréquence d'émission (F_E) est un paramètre fixe donné et :

   - les positions (T, R) respectives des dispositifs transmetteur (D_TX) et récepteur (D_RX) sont des paramètres fixes donnés, le paramètre dont la valeur calculée (V_CALC) est déterminée étant la position (S) de la source (SO) ; ou
   - les positions (S, T) respectives de la source (SO) et du dispositif transmetteur (D_TX) sont des paramètres fixes donnés, le paramètre dont la valeur calculée (V_CALC) est déterminée étant la position (R) du dispositif récepteur (D_RX) ; ou
   - les positions (S, R) respectives de la source (SO) et du dispositif récepteur (D_RX) sont des paramètres fixes donnés, le paramètre dont la valeur calculée (V_CALC) est déterminée étant la position (T) du dispositif transmetteur (D_TX).

4. Procédé selon l'une quelconque des revendications 1 à 2, dans lequel les positions (S, T, R) respectives de la source (SO) et des dispositifs transmetteur (D_TX) et récepteur (D_RX) sont des paramètres fixes donnés, le paramètre dont la valeur calculée (V_CALC) est déterminée étant la fréquence d'émission (F_E).

5. Procédé selon la revendication 4, dans lequel ladite valeur calculée (V_CALC) est déterminée dans ladite bande fréquentielle de sorte à maximiser la fonction de calcul.

6. Procédé selon l'une quelconque des revendications 1 à 5, dans lequel ladite valeur calculée (V_CALC) est déterminée par une méthode de dichotomie.

7. Procédé selon l'une quelconque des revendications 1 à 6, dans lequel la surface (11) est configurée pour réfléchir des signaux provenant de la source et / ou du dispositif transmetteur sans direction privilégiée.

8. Procédé selon l'une quelconque des revendications 1 à 7, dans lequel la fonction de calcul comporte trois termes, dont :

- un premier terme représentatif de la contribution, en termes de puissance, de signaux rétrodiffusés par le dispositif transmetteur (D_TX) et parvenant au dispositif récepteur (D_RX) sans réflexion sur la surface (11),
- un deuxième terme représentatif de la contribution, en termes de puissance, d'un couplage entre des signaux rétrodiffusés par le dispositif transmetteur et parvenant au dispositif récepteur sans réflexion sur la surface et des signaux émis par la source (SO) et parvenant au dispositif récepteur sans réflexion sur la surface,
- un troisième terme représentatif de la contribution, en termes de puissance, d'un couplage entre des signaux rétrodiffusés par le dispositif transmetteur et parvenant au dispositif récepteur sans réflexion sur la surface et des signaux émis par la source et parvenant au dispositif récepteur après réflexion sur la surface.

9. Programme d'ordinateur comportant des instructions pour la mise en œuvre d'un procédé de paramétrage selon l'une quelconque des revendications 1 à 8 lorsque ledit programme est exécuté par un ordinateur.

10. Support d'enregistrement lisible par un ordinateur sur lequel est enregistré un programme d'ordinateur selon la revendication 9.

11. Dispositif de paramétrage (D_PAR) d'un système (10) de communication par rétrodiffusion ambiante comportant une source émettrice (SO) dans une bande fréquentielle donnée, un dispositif transmetteur (D_TX) et un dispositif récepteur (D_RX), ledit système comportant également une surface (11), apte à réfléchir des signaux provenant de la source et /ou du dispositif transmetteur vers le dispositif récepteur, ledit système étant paramétré par :

- les positions (S, T, R) respectives de la source et des dispositifs transmetteur et récepteur,
- la fréquence d'émission (F_E) de la source dans ladite bande fréquentielle,

ledit dispositif de paramétrage (D_PAR) comportant un module (MOD_DET) de détermination, configuré pour déterminer une valeur, dite « valeur calculée » (V_CALC), d'au moins un desdits paramètres de sorte qu'une fonction de calcul évaluant, en fonction desdits paramètres et de l'influence de la surface (11) sur les signaux destinés à être reçus par le dispositif récepteur (D_RX), l'écart de puissance (E_P) reçue par le dispositif récepteur selon que le dispositif transmetteur est dans un état de rétrodiffusion ou de non-rétrodiffusion, est, en valeur absolue, supérieure ou égale à un seuil (S_P) à partir duquel le dispositif récepteur est apte à décoder un signal émis par la source et rétrodiffusé par le dispositif transmetteur.

12. Dispositif de paramétrage selon la revendication 11, ledit dispositif de paramétrage comportant également un module (MOD_OBT) d'obtention configuré pour obtenir ladite fonction de calcul.

13. Dispositif de paramétrage selon l'une quelconque des revendications 11 à 12, ledit dispositif de paramétrage étant compris dans la source (SO), ou dans le dispositif transmetteur (D_TX), ou dans le dispositif récepteur (D_RX).

14. Système (10) de communication par rétrodiffusion ambiante comportant une source émettrice (SO) dans une bande fréquentielle donnée, un dispositif transmetteur (D_TX) et un dispositif récepteur (D_RX), ledit système comportant également un dispositif de paramétrage (D_PAR) selon l'une quelconque des revendications 11 à 13 ainsi qu'une surface (11) apte à réfléchir des signaux provenant de la source et / ou du dispositif transmetteur vers le dispositif récepteur, ledit système étant paramétré par :

- les positions (S, T, R) respectives de la source et des dispositifs transmetteur et récepteur,
- la fréquence d'émission (F_E) de la source dans ladite bande fréquentielle,

la valeur d'au moins un desdits paramètres étant déterminée par ledit dispositif de paramétrage (D_PAR).

**Patentansprüche**

1. Verfahren zur Parametrierung eines System (10) zur Kommunikation durch Umgebungsrückstreuung, das eine in einem gegebenen Frequenzband sendende Quelle (SO), eine Übertragungsvorrichtung (D_TX) und eine Empfängervorrichtung (D_RX) umfasst, wobei das System auch eine Oberfläche (11) umfasst, die geeignet ist, von der Quelle und/oder von der Übertragungsvorrichtung kommende Signale zu der Empfängervorrichtung zu reflektieren, wobei das System parametriert wird durch:

- die jeweiligen Positionen (S, T, R) der Quelle und der Übertragungs- und Empfängervorrichtungen,
- die Sendefrequenz (F_E) der Quelle in dem Frequenzband, wobei das Verfahren von einer Parametrierungsvorrichtung (D_PAR) ausgeführt wird und einen Schritt (E20) des Ermittelns eines Werts, "berechneter Wert" (V_CALC) genannt, mindestens eines der Parameter umfasst, so dass eine Rechenfunktion, die in Abhängigkeit von den Parametern und von dem Einfluss der Oberfläche (11) auf die Signale, die von der Empfängervorrichtung (D_RX) empfangen werden sollen, die Abweichung (E_P) einer von der Empfängervorrichtung empfangenen Leistung (E_P) evaluiert, je nachdem, ob die Übertragungsvorrichtung in einem Rückstreu- oder Nicht-Rückstreu-Zustand ist, als absoluter Wert größer oder gleich einem Schwellenwert (S_P) ist, ab dem die Empfängervorrichtung in der Lage ist, ein von der Quelle gesendetes und von der Übertragungsvorrichtung rückgestreutes Signal zu decodieren.

2. Verfahren nach Anspruch 1, wobei das Verfahren ferner, vor dem Ausführen des Schritts (E20) des Ermittelns, einen Schritt (E10) des Erhaltens der Rechenfunktion umfasst.

3. Verfahren nach einem der Ansprüche 1 bis 2, wobei die Sendefrequenz (F_E) ein gegebener feststehender Parameter ist und:

- die jeweiligen Positionen (T, R) der Übertragungsvorrichtung (D_TX) und der Empfängervorrichtung (D_RX) gegebene feststehende Parameter sind, wobei der Parameter, dessen berechneter Wert (V_CALC) ermittelt wird, die Position (S) der Quelle (SO) ist; oder
- die jeweiligen Positionen (S, T) der Quelle (SO) und der Übertragungsvorrichtung (D_TX) gegebene feststehende Parameter sind, wobei der Parameter, dessen berechneter Wert (V_CALC) ermittelt wird, die Position (R) der Empfängervorrichtung (D_RX) ist; oder
- die jeweiligen Positionen (S, R) der Quelle (SO) und der Empfängervorrichtung (D_RX) gegebene feststehende Parameter sind, wobei der Parameter, dessen berechneter Wert (V_CALC) ermittelt wird, die Position (T) der Übertragungsvorrichtung (D_TX) ist.

4. Verfahren nach einem der Ansprüche 1 bis 2, wobei die jeweiligen Positionen (S, T, R) der Quelle (SO) und der Übertragungsvorrichtung (D_TX) und der Empfängervorrichtung (D_RX) gegebene feststehende Parameter sind, wobei der Wert, dessen berechneter Wert (V_CALC) ermittelt wird, die Sendefrequenz (F_E) ist.

5. Verfahren nach Anspruch 4, wobei der berechnete Wert (V_CALC) in dem Frequenzband so ermittelt wird, dass die Rechenfunktion maximiert wird.

6. Verfahren nach einem der Ansprüche 1 bis 5, wobei der berechnete Wert (V_CALC) mit einer Dichotomiemethode ermittelt wird.

7. Verfahren nach einem der Ansprüche 1 bis 6, wobei die Oberfläche (11) dazu ausgestaltet ist, von der Quelle und/oder der Übertragungsvorrichtung kommende Signale ohne bevorzugte Richtung zu reflektieren.

8. Verfahren nach einem der Ansprüche 1 bis 7, wobei die Rechenfunktion drei Terme umfasst, darunter:

- einen ersten Term, der für den Beitrag hinsichtlich der Leistung von Signalen repräsentativ ist, die von der Übertragungsvorrichtung (D_TX) rückgestreut werden und ohne Reflexion auf der Oberfläche (11) zu der Empfängervorrichtung (D_RX) gelangen,
- einen zweiten Term, der für den Beitrag hinsichtlich der Leistung einer Kopplung zwischen Signalen, die von der Übertragungsvorrichtung rückgestreut werden und ohne Reflexion auf der Oberfläche zu der Empfängervorrichtung gelangen, und Signalen, die von der Quelle (SO) gesendet werden und ohne Reflexion auf der Oberfläche zu der Empfängervorrichtung gelangen, repräsentativ ist,
- einen dritten Term, der für den Beitrag hinsichtlich der Leistung einer Kopplung zwischen Signalen, die von der Übertragungsvorrichtung rückgestreut werden und ohne Reflexion auf der Oberfläche zu der Empfängervorrichtung gelangen, und Signalen, die von der Quelle (SO) gesendet werden und nach Reflexion auf der Oberfläche zu der Empfängervorrichtung gelangen, repräsentativ ist.

9. Computerprogramm, das Anweisungen umfasst, die bei der Ausführung des Programms durch einen Computer ein Verfahren zur Parametrierung nach einem der Ansprüche 1 bis 8 ausführen.

10. Computerlesbares Speichermedium, auf dem ein Computerprogramm nach Anspruch 9 gespeichert ist.

11. Parametrierungsvorrichtung (D_PAR) eines Systems (10) zur Kommunikation durch Umgebungsrückstreuung, das eine in einem gegebenen Frequenzband sendende Quelle (SO), eine Übertragungsvorrichtung (D_TX) und eine Empfängervorrichtung (D_RX) umfasst, wobei das System auch eine Oberfläche (11) umfasst, die geeignet ist, von der Quelle und/oder von der Übertragungsvorrichtung kommende Signale zu der Empfängervorrichtung zu reflektieren, wobei das System parametriert wird durch:

- die jeweiligen Positionen (S, T, R) der Quelle und der Übertragungs- und Empfängervorrichtungen,
- die Sendefrequenz (F_E) der Quelle in dem Frequenzband, wobei die Parametrierungsvorrichtung (D_PAR) ein Modul (MOD_DET) zur Ermittlung umfasst, das dazu ausgestaltet ist, einen Wert, "berechneter Wert" (V_CALC) genannt, mindestens eines der Parameter zu ermitteln, so dass eine Rechenfunktion, die in Abhängigkeit von den Parametern und von dem Einfluss der Oberfläche (11) auf die Signale, die von der Empfängervorrichtung (D_RX) empfangen werden sollen, die Abweichung (E_P) einer von der Empfängervorrichtung empfangenen Leistung (E_P) evaluiert, je nachdem, ob das Übertragungsvorrichtung in einem Rückstreu- oder Nicht-Rückstreu-Zustand ist, als absoluter Wert größer oder gleich einem Schwellenwert (S_P) ist, ab dem die Empfängervorrichtung in der Lage ist, ein von der Quelle gesendetes und von der Übertragungsvorrichtung rückgestreutes Signal zu decodieren.

12. Parametrierungsvorrichtung nach Anspruch 11, wobei die Parametrierungsvorrichtung auch ein Modul (MOD_OBT) zum Erhalten umfasst, das dazu ausgestaltet ist, die Rechenfunktion zu erhalten.

13. Parametrierungsvorrichtung nach einem der Ansprüche 11 bis 12, wobei die Parametrierungsvorrichtung in der Quelle (SO) oder in der Übertragungsvorrichtung (D_TX) oder in der Empfängervorrichtung (D_RX) enthalten ist.

14. System (10) zur Kommunikation durch Umgebungsrückstreuung, das eine in einem gegebenen Frequenzband sendende Quelle (SO), eine Übertragungsvorrichtung (D_TX) und eine Empfängervorrichtung (D_RX) umfasst, wobei das System auch eine Parametrierungsvorrichtung (D_PAR) nach einem der Ansprüche 11 bis 13 umfasst sowie eine Oberfläche (11), die geeignet ist, von der Quelle und/oder von der Übertragungsvorrichtung kommende Signale zu der Empfängervorrichtung zu reflektieren, wobei das System parametriert wird durch:

- die jeweiligen Positionen (S, T, R) der Quelle und der Übertragungs- und Empfängervorrichtungen,
- die Sendefrequenz (F_E) der Quelle in dem Frequenzband, wobei der Wert mindestens eines der Parameter von der Parametrierungsvorrichtung (D_PAR) ermittelt wird.

**Claims**

1. Method for parametrizing a system (10) for communicating via ambient backscatter, comprising a source (SO) emitting in a given frequency band, a transmitter device (D_TX) and a receiver device (D_RX), said system also comprising a surface (11) capable of reflecting signals originating from the source and/or transmitter device towards the receiver device, said system being parametrized by:

- the respective positions (S, T, R) of the source and of the transmitter and receiver devices,
- the frequency (F_E) of emission of the source in said frequency band,

said method being implemented by a parametrizing device (D_PAR) and comprising a step (E20) of determining a value, called the "calculated value" (V_CALC), of at least one of said parameters so that a calculation function, evaluating, depending on said parameters and on the influence of the surface (11) on the signals intended to be received by the receiver device (D_RX), the difference (E_P) in the power received by the receiver device when the transmitter device is in a backscattering state and in a non-backscattering state, is, in absolute value, greater than or equal to a threshold (S_P) from which the receiver device is capable of decoding a signal emitted by the source and backscattered by the transmitter device.

2. Method according to Claim 1, said method further comprising, before implementation of the determining step (E20), a step (E10) of obtaining said calculation function.

3. Method according to either of Claims 1 and 2, wherein the emission frequency (F_E) is a given set parameter and:

    - the respective positions (T, R) of the transmitter (D_TX) and receiver (D_RX) devices are given set parameters, the parameter whose calculated value (V_CALC) is determined being the position (S) of the source (SO); or
    - the respective positions (S, T) of the source (SO) and of the transmitter device (D_TX) are given set parameters, the parameter whose calculated value (V_CALC) is determined being the position (R) of the receiver device (D_RX); or
    - the respective positions (S, R) of the source (SO) and of the receiver device (D_RX) are given set parameters, the parameter whose calculated value (V_CALC) is determined being the position (T) of the transmitter device (D_TX).

4. Method according to either of Claims 1 and 2, wherein the respective positions (S, T, R) of the source (SO) and of the transmitter (D_TX) and receiver (D_RX) devices are given set parameters, the parameter whose calculated value (V_CALC) is determined being the emission frequency (F_E).

5. Method according to Claim 4, wherein said calculated value (V_CALC) is determined in said frequency band so as to maximize the calculation function.

6. Method according to any of Claims 1 to 5, wherein said calculated value (V_CALC) is determined by a bisection method.

7. Method according to any of Claims 1 to 6, wherein the surface (11) is configured to reflect signals originating from the source and/or transmitter device without privileged direction.

8. Method according to any of Claims 1 to 7, wherein the calculation function comprises three terms, namely:

    - a first term representative of the contribution, in terms of power, of signals backscattered by the transmitter device (D_TX) and that reach the receiver device (D_RX) without reflection from the surface (11),
    - a second term representative of the contribution, in terms of power, of coupling between signals backscattered by the transmitter device and that reach the receiver device without reflection from the surface and signals emitted by the source (SO) and that reach the receiver device without reflection from the surface,
    - a third term representative of the contribution, in terms of power, of coupling between signals backscattered by the transmitter device and that reach the receiver device without reflection from the surface and signals emitted by the source and that reach the receiver device after reflection from the surface.

9. Computer program comprising instructions for implementing a parametrizing method according to any of Claims 1 to 8 when said program is executed by a computer.

10. Computer-readable storage medium on which a computer program according to Claim 9 is stored.

11. Device (D_PAR) for parametrizing a system (10) for communicating via ambient backscatter, comprising a source (SO) emitting in a given frequency band, a transmitter device (D_TX) and a receiver device (D_RX), said system also comprising a surface (11), capable of reflecting signals originating from the source and/or transmitter device towards the receiver device, said system being parametrized by:

    - the respective positions (S, T, R) of the source and of the transmitter and receiver devices,
    - the frequency (F_E) of emission of the source in said frequency band,

said parametrizing device (D_PAR) comprising a determining module (MOD_DET), configured to determine a value, called the "calculated value" (V_CALC), of at least one of said parameters so that a calculation function, evaluating, depending on said parameters and on the influence of the surface (11) on the signals intended to be received by the receiver device (D_RX), the difference (E_P) in the power received by the receiver device when the transmitter device is in a backscattering state and in a non-backscattering state, is, in absolute value, greater than or equal to a threshold (S_P) from which the receiver device is capable of decoding a signal emitted by the source and backscattered by the transmitter device.

**12.** Parametrizing device according to Claim 11, said parametrizing device also comprising an obtaining module (MOD_OBT) configured to obtain said calculation function.

**13.** Parametrizing device according to either of Claims 11 and 12, said parametrizing device being included in the source (SO), or in the transmitter device (D_TX), or in the receiver device (D_RX).

**14.** System (10) for communicating via ambient backscatter, comprising a source (SO) emitting in a given frequency band, a transmitter device (D_TX) and a receiver device (D_RX), said system also comprising a parametrizing device (D_PAR) according to any of Claims 11 to 13 and a surface (11) capable of reflecting signals originating from the source and/or transmitter device towards the receiver device, said system being parametrized by:

- the respective positions (S, T, R) of the source and of the transmitter and receiver devices,
- the frequency (F_E) of emission of the source in said frequency band,

the value of at least one of said parameters being determined by said parametrizing device (D_PAR).

[Fig. 1]

[Fig. 2]

[Fig. 3]

D_PAR

[Fig. 4]

OBT E_P — E10

DET V_CALC $\Rightarrow |E\_P| \geq S\_P$ — E20

[Fig. 5]

OBT E_P — E10

DET V_CALC /
$F\_E = F\_E\_FIX,\ S = S\_FIX,\ T = T\_FIX$
$\Rightarrow |E\_P| \geq S\_P$ — E20

[Fig. 6]

E10 — OBT E_P

E20 — DET V_CALC /
$S = S\_FIX, T = T\_FIX, R = R\_FIX$
$\Rightarrow |E\_P| \geq S\_P$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **N. VAN HUYNH** ; **D. THAI HOANG** ; **X. LU** ; **D. NIYATO** ; **P. WANG** ; **D. IN KIM**. Ambient Backscatter Communications: A Contemporary Survey. *IEEE Communications Surveys & Tutorials*, 2018, vol. 20 (4), 2889-2922
- Effects of building materials and structures on radiowave propagation above about 100 MHz-P Series-Radiowave. *Recommendation ITU-R P.2040-1*, July 2015
- **K. RACHEDI** ; **D. T. PHAN-HUY** ; **N. SELMENE** ; **A. OURIR** ; **M. GAUTIER** ; **A. GATI** ; **A. GALINDO-SERRANO** ; **R. FARA** ; **J. DE ROSNY**. Real-Time Ambient Backscatter Demonstration. *IEEE INFO-COM 2019 Posters and Demos*, 01 May 2019
- *Recommendation ITU-R P.2040-1*, July 2015